# EUROPEAN PATENT SPECIFICATION

(11) **EP 3 488 388 B1**
(45) Date of publication and mention of the grant of the patent: **10.08.2022**
(21) Application number: 17831890.3
(22) Date of filing: 20.07.2017
(51) Int. Cl.: G06T 5/00, G06T 5/20

(54) **VIDEO PROCESSING METHOD AND APPARATUS**
VIDEOVERARBEITUNGSVERFAHREN UND -VORRICHTUNG
PROCÉDÉ ET APPAREIL DE TRAITEMENT DE VIDÉO

(30) Priority: 20.07.2016 CN 201610574955; 21.06.2017 US 201715629702
(43) Date of publication of application: 29.05.2019
(73) Proprietor: Alibaba Group Holding Limited, Grand Cayman (KY)
(72) Inventor: MEI, Dawei, Yu Hang District 311121 (CN); JIANG, Wenfei, Yu Hang District 311121 (CN); PAN, Li, Yu Hang District 311121 (CN)
(74) Representative: Finnegan Europe LLP
(86) International application number: PCT/US2017/043131
(87) International publication number: WO 2018/017866

(56) References cited:
- US-A1- 2007 177 817
- US-A1- 2008 316 364
- US-A1- 2011 091 127
- US-A1- 2012 105 728
- US-A1- 2013 071 040
- US-A1- 2013 128 123
- US-A1- 2013 162 911
- US-A1- 2013 177 253
- US-A1- 2013 321 673
- US-A1- 2014 002 745
- US-A1- 2014 002 745
- US-B2- 8 675 102
- JANUSZ PAWEL KOWALSKI ET AL: "Detection of Noise in Digital Images by Using the Averaging Filter Name COV", 18 March 2013 (2013-03-18), INTELLIGENT INFORMATION AND DATABASE SYSTEMS, SPRINGER BERLIN HEIDELBERG, BERLIN, HEIDELBERG, PAGE(S) 1 - 8, XP047025978, ISBN: 978-3-642-36542-3 * abstract * * section 1, last two paragraphs * * section 2, last three paragraphs; equations 4-7 * * section 3, penultimate paragraph; figure 1 *
- ALI ABDULLAH YAHYA ET AL: "Video Noise Reduction Method Using Adaptive Spatial-Temporal Filtering", DISCRETE DYNAMICS IN NATURE AND SOCIETY, vol. 2015, 1 January 2015 (2015-01-01), pages 1-10, XP055593259, ISSN: 1026-0226, DOI: 10.1155/2015/351763

## Description

### TECHNICAL FIELD

The disclosure relates to a field of computers, and in particular, to video processing technology.

### BACKGROUND

In video encoding processing, noise processing has always been a very challenging aspect. There are many sources for video noise , such as thermal noise during video capturing, encoding noise during video encoding, and processing noise in some video enhancement processing. The video noise may deteriorate viewing experience of users viewing the video images, increase the difficulty of video compression, reduce a compression ratio, and affect accuracy of a video detection algorithm. Therefore, it is necessary to encode and denoise videos having significant noise. There are many denoising algorithms, such as a bilateral filter, a non-local mean filter, a guided filter, a block-matching and 3D (BM3D) filter, a block-matching and 4D (BM4D) filter and the like, and they have all been widely used in respective application fields.

But noise estimation methods have a common problem: the accuracy of their estimation results rely directly on the image content per se, and they cannot distinguish whether the extracted high frequency energy is from a signal or from noise. That is, a precondition that they can obtain a more accurate result is that the high frequency energy of the signal is only distributed in a small proportion of image regions. In other words, it is expected that, the video has more uniform blocks or static blocks, which cannot be met in many cases.

Another common problem of the denoising algorithms is the huge cost in processing time. Taking the BM4D filter as an example, it takes tens of seconds for processing one frame on a computer based on an Intel^{®} i7 quad-core CPU. Therefore, the BM4D filter is highly unlikely to be used in a video encoder. On the other hand, the guided filter has the lowest complexity, but one main problem of the guided filter is that those regions with many details cannot be processed, because the guided filter cannot calculate matching blocks, and therefore having a weak noise suppression effect on regions having great high frequency energy for signals.

US 2014/0002745 A1 relates to systems and methods for conducting a real-time perceptual quality analysis of a video, wherein the perceptual quality analysis includes noise measurement, contrast measurement, or sharpness measurement. JANUSZ PAWEL KOWLASKI et al: "Detection of Noise in Digital Images by Using the Averaging Filter Name COV", 18 March 2013, Intelligent Information and Database Systems, Springer Berlin Heidelberg, Berlin, Pages 1-8, relates to methods for estimating the level of noise based on the properties of the smoothing filter. ALI ABDULLAH YAHYA et al: "Video Noise Reduction Method Using Adaptive Spatial-Temporal Filtering", Discrete Dynamics in Nature and Society, vol. 2015, 1 January 2015, pages 1-10, relates to a method of video noise reduction based on the spatial Wiener filter and the temporal filter, where in the spatial Wiener filter both the amount of noise and the size of the mask are taking into consideration.

### SUMMARY

An objective of the present application is to provide a video processing method and device, which can solve the problem that the existing solution cannot accurately denoise videos. A computer-implemented method for video processing, a video processing apparatus, and a computer-readable medium as recited in claims 1, 7, and 8 respectively are disclosed.

### BRIEF DESCRIPTION OF THE DRAWINGS

The drawings herein are provided, as a part of the disclosure, for further understanding of the disclosure. Illustrative embodiments of the disclosure and description thereof are used to explain the disclosure, and are not restrictive. In the drawings,
**FIG. 1** illustrates a schematic flow chart of an exemplary video processing method, according to some embodiments of the disclosure;
**FIG. 2** illustrates a schematic diagram of an exemplary video processing system, according to some embodiments of the disclosure;
**FIG. 3** illustrates a schematic flow chart of an exemplary estimating of an input video noise to obtain noise level information of the input video, according to some embodiments of the disclosure;
**FIG. 4** illustrates a flow chart of an exemplary noise estimation algorithm, according to some embodiments of the disclosure ;
**FIG. 5** illustrates a schematic diagram of sample changes of a statistics distribution curve of block variance, according to some embodiments of the disclosure;
**FIG. 6** illustrates a schematic diagram of an exemplary processing of an input video, according to some embodiments of the disclosure;
**FIG. 7** illustrates a schematic diagram of an exemplary denoising module in cooperation with an encoder, according to some embodiments of the disclosure;
**FIG. 8** illustrates a schematic diagram of an exemplary denoising algorithm, according to some embodiments of the disclosure;
**FIG. 9** illustrates a structural schematic diagram of an exemplary video processing apparatus, according to some embodiments of the disclosure; and
**FIG. 10** illustrates a schematic diagram of an exemplary noise estimation device, according to some embodiments of the disclosure.

### DETAILED DESCRIPTION

Reference will now be made in detail to the disclosed embodiments, examples of which are illustrated in the accompanying drawings. Wherever convenient, the same reference numbers will be used throughout the drawings to refer to the same or like parts.

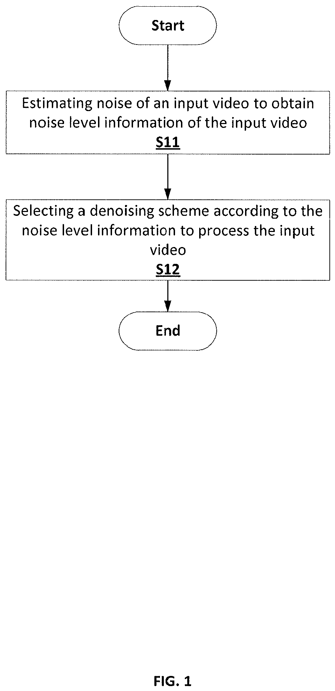

**FIG. 1** illustrates a schematic flow chart of an exemplary video processing method. The method includes step S11 and step S12. In step S11, noise of an input video is estimated to obtain noise level information of the input video. In step S12, a denoising scheme corresponding to the noise level information is selected to process the input video.

In the video processing method, noise of an input video is estimated to obtain noise level information, and a corresponding denoising scheme is selected based on the noise level information to process the input video. Further, in the denoising scheme, multiple denoising algorithms are merged to achieve an appropriate denoising effect.

In some embodiments, a video processing system is provided.

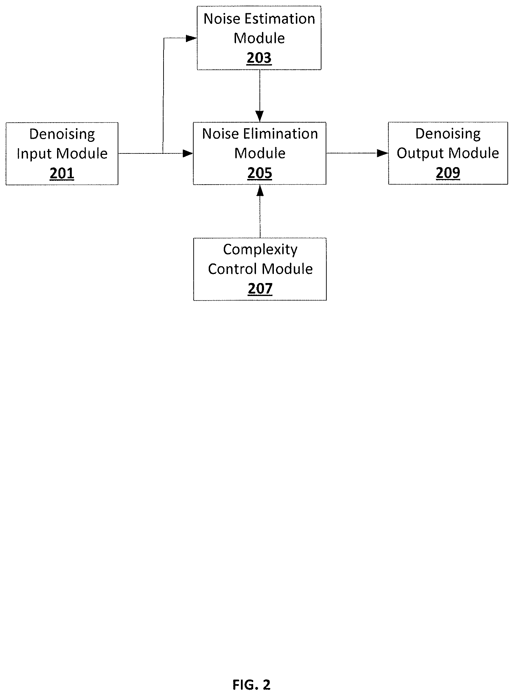

**FIG. 2** illustrates a schematic diagram of an exemplary video processing system, according to some embodiments of the disclosure. The video processing system includes a denoising input module 201, a noise estimation module 203, a noise elimination module 205, a complexity control module 207, and a denoising output module 209. These modules (and any corresponding sub-modules or sub-units) can be packaged functional hardware units (e.g., portions of an integrated circuit) designed for use with other components or a part of a program (stored on a computer readable medium) that performs a particular function, corresponding to the particular step, of related functions.

These modules in the video processing system cooperate with each other to accomplish denoising work of an input video. For example, after the denoising input module 201 acquires an input video, the denoising input module 201 can provide the input video to the noise estimation module 203 and the noise elimination module 205. The noise estimation module 203 performs noise estimation on the input video to obtain noise level information. The noise elimination module 205 selects a denoising scheme according to the noise level information from noise estimation module 203 and system complexity control from complexity control module 207, to perform a reasonable and efficient noise elimination process on the input video. While it is preferable that the noise elimination module 205 eliminates any noise, it is appreciated that the noise elimination module 205 can minimize any noise. After reducing or elimination the noise on the input video, noise elimination module outputs the denoised video to denoising output module 209.

The video processing system supports customization according to system complexity. And the video processing system may further flexibly adjust the denoising scheme and a denoising algorithm in the denoising scheme according to a relationship between actual complexity and preset values during the processing. Thus, the best denoising requirement may be met under a limited complexity, and a compression ratio and compression quality of the input video may be improved.

Steps S11 and S12 as shown in **FIG. 1** will be further described.

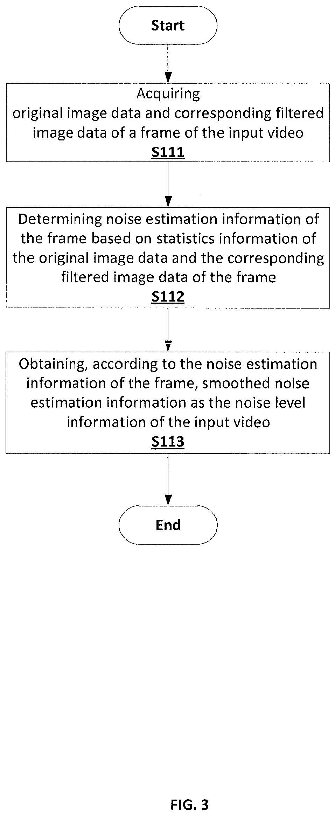

**FIG. 3** illustrates a schematic flow chart of an exemplary estimating an input video noise to obtain noise level information of the input video, according to some embodiments of the disclosure. Estimating of an input video noise to obtain noise level information of the input video may include step Sill, step S112 and step S113.

In step Sill, original image data and corresponding filtered image data of a frame of the plurality of frames from the input video are acquired.

In step S112, noise estimation information of the frame is determined based on statistics information of the original image data and the corresponding filtered image data of the frame.

In step S113, smoothed noise estimation information is obtained according to the noise estimation information of the frame, and the smoothed noise estimation information is used as the noise level information of the input video.

If it can be distinguished during the noise estimation that whether the extracted high frequency energy is a signal or noise, the accuracy of the noise estimation will be improved. In some embodiments, high frequency components of video content can contain more energy after a low-pass filtering. In some embodiments, original image data and corresponding filtered image data of a frame of an input video are obtained through an input video. A mathematical calculation is performed on the original image data and the corresponding filtered image data of the frame. For example, a block variance calculation can be performed to obtain corresponding statistics information. And noise estimation information of the frame can be determined by comparing statistics information of the original image data and the corresponding filtered image data of the frame. Since the result of single-frame noise estimation has a large jitter near a true value, it is inaccurate if single-frame noise estimation information is used as noise estimation of the input video. Thus, an error of noise estimation can be reduced by multi-frame joint estimation, and the result of a multi-frame noise estimation is given by merging single-frame noise levels. For example, a relatively smooth estimation value is obtained by effectively estimating an average of single-frame noise levels within a time window, significantly improving accuracy and robustness of the noise estimation.

In some embodiments, the statistics information may include original statistics information and processing statistics information. Therefore, step S112 may include: performing a block variance calculation on the original image data and the corresponding filtered image data of the frame respectively, to obtain corresponding original statistics information and processing statistics information; and comparing the original statistics information of the frame with the processing statistics information, to determine the noise estimation information of the frame.

An algorithm for noise estimation will be further described as below.

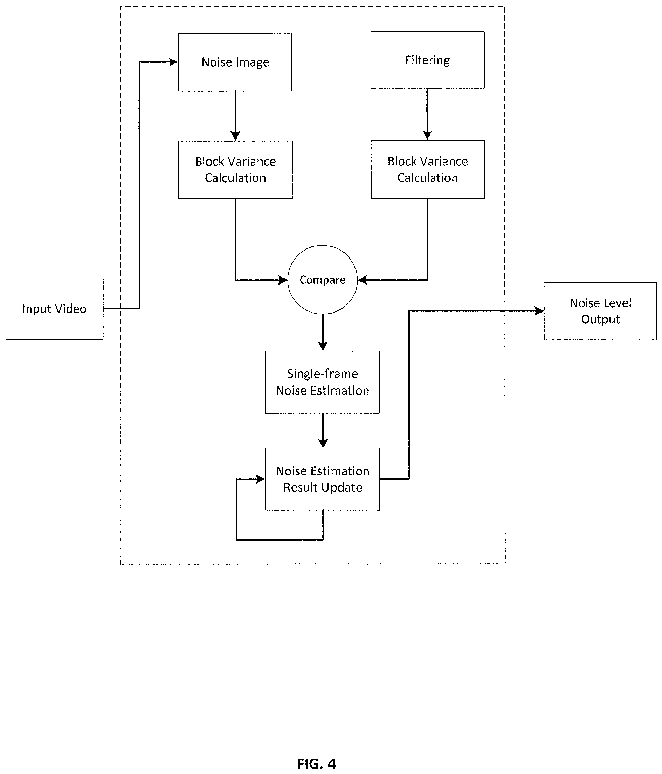

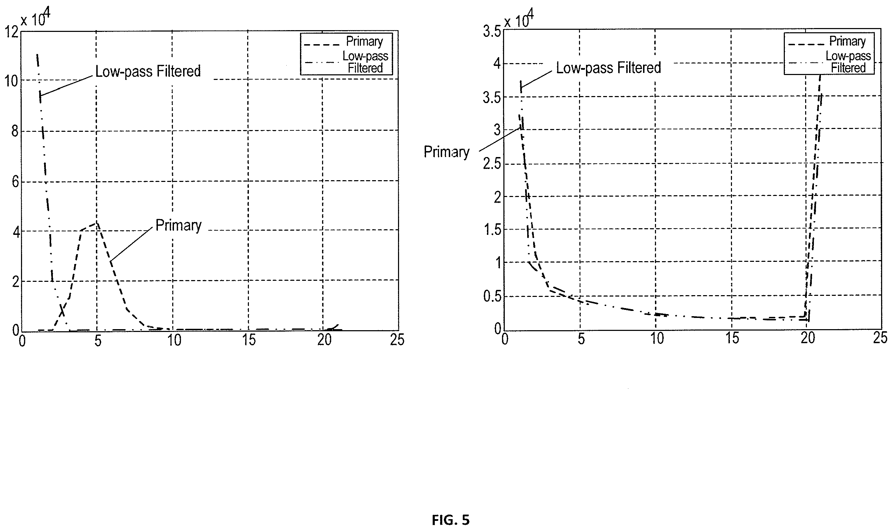

**FIG. 4** illustrates a flow chart of an exemplary noise estimation algorithm, according to some embodiments of the disclosure. Original image data and filtered image data are acquired according to the input video, and a block variance calculation is performed on the original image data and the corresponding filtered image data of each frame of the input video, respectively. For example, a result of the block variance calculation on the original image data is denoted as V1, a result of the block variance calculation on the filtered image data is denoted as V2. The statistics information may be a block variance, and may also be other statistics obtained from the block variance. V1 is compared with V2 to obtain noise estimation information of the corresponding frame. A differential comparison may be made upon comparison, for example, |V1-V2|, and the differential result |V1-V2| is then compared with a threshold to obtain single-frame noise estimation for output (to, e.g., noise elimination module 205 of **FIG. 2**). The single-frame noise levels (e.g., the single-frame noise estimation) may also be estimated according to changes of a statistics distribution curve obtained from the calculated block variance, as shown below in **FIG. 5**.

**FIG. 5** illustrates a schematic diagram of changes of a statistics distribution curve of block variance, according to some embodiments of the disclosure. On the left side of **FIG. 5** is a block variance histogram distribution of real noise, on the right side is a block variance histogram distribution of a detailed image. As it can be seen from **FIG. 5**, after filtering, block variance distribution of the real noise may move to a region of Value 0, and the change of the amplitude is evident; while the change of block variance distribution of the detailed image is little. Whether the extracted high frequency energy is a signal or noise can be distinguished through changes of a statistics distribution curve of the original image data and the filtered image data, therefore improving the accuracy of estimation of single-frame noise levels. It should be noted that the detailed image is an image with a greater region variance. For example, the detailed image may be an image containing an edge of a tree, grass or an object.

In step S12 of **FIG. 1**, a denoising scheme corresponding to the noise level information is selected to process the input video by: comparing the noise level information with a preset denoising threshold, to determine whether the input video is a video-to-be-denoised; if the input video is not a video-to-be-denoised, the denoising scheme directly outputs the input video, and if the input video is a video-to-be-denoised, the denoising scheme selects a corresponding denoising algorithm of the video-to-be-denoised according to the noise level information.

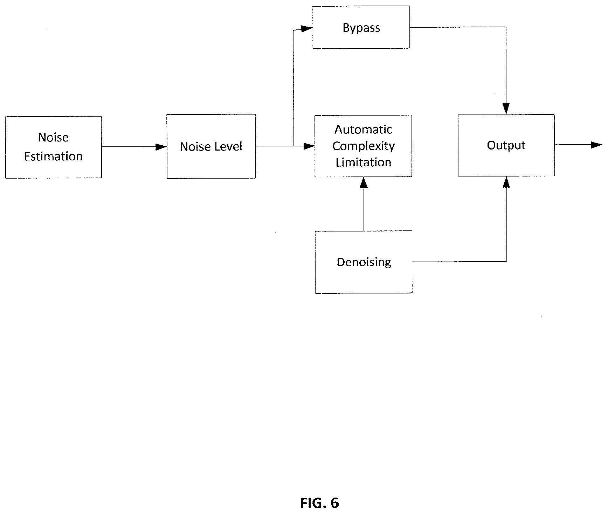

**FIG. 6** illustrates a schematic diagram of an exemplary processing of an input video.

As shown in **FIG. 6**, according to the result of the noise estimation, videos without noise or with a little noise are not denoised (e.g., bypassed), and the input video is directly output. As for videos with a small amount of noise, simple and rapid denoising is performed. And as for videos with obvious noise, noise is suppressed as much as possible on the premise of being allowed by complexity.

When determining whether the input video is a video-to-be-denoised, the noise level information is compared with a preset denoising threshold. An estimation threshold is set according to the noise level information. Statistics is made on a total number of frames having single-frame noise level greater than the estimation threshold in the noise estimation information. Next, whether the total number of frames is greater than a preset denoising threshold (a number threshold) is determined. And if the total number of frames is greater than a preset denoising threshold, the input video is determined as the video-to-be-denoised. When the input video is not a video-to-be-denoised, the denoising scheme directly outputs the input video. And when the input video is determined as the video-to-be-denoised, the denoising scheme maximizes a denoising effect according to an automatic complexity limitation. The auto complexity limitation may limit the complexity of a denoising algorithm according to the noise level information of the video-to-be-denoised. That is, during a denoising process, the denoising algorithm with corresponding complexity is selected according to the noise level information, so as to denoise the video-to-be-denoised.

It is appreciated that the comparing of the total number of frames with a preset denoising threshold is merely an illustrated method of determining whether an input video is a video-to-be-denoised.

In some embodiments, selecting a corresponding denoising algorithm of the video-to-be-denoised according to the noise level information in step S12 includes: determining a denoising parameter of the video-to-be-denoised according to the noise level information; and determining the denoising algorithm of the video-to-be-denoised according to the denoising parameter.

When the video-to-be-denoised is denoised, a reasonable denoising parameter is determined according to noise level information of the video-to-be-denoised at first. Then, a denoising scheme merged from one or more denoising algorithms is determined according to the denoising parameter.

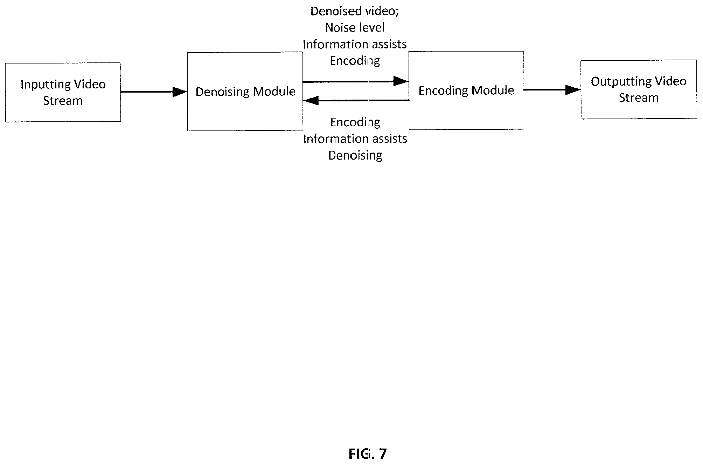

In some embodiments, determining a denoising parameter of the video-to-be-denoised according to the noise level information includes: determining the denoising parameter of the video-to-be-denoised according to the noise level information and encoder information, as further discussed with reference to **FIG. 7**.

**FIG. 7** illustrates a schematic diagram of an exemplary denoising module in cooperation with an encoder, according to some embodiments of the disclosure. The denoising module and the encoding module may cooperate with each other. For example, noise level information of the denoising module can assist the encoding module in setting a quantization adjustment strategy, a rate distortion optimization strategy, a mode selection strategy and the like. The encoder information may also be used to assist with denoising. For example, an encoded quantization parameter value may guide denoising strength of the denoising module. If the quantization parameter value is great, the tolerance for blurring of the denoised image is also great. A reasonable denoising parameter can be set by a code rate, quantization information and the like of the encoder, to achieve the aim of controlling the code rate, suppressing encoding noise (block noise), and so on.

The system according to some embodiments of the disclosure provides a denoising module cooperating with an encoder, so as to improve the processing effect of the encoder on the input video. The encoder in the system can be an encoder having a video denoising function. The system provides some schemes of denoising in cooperation with encoding processing, and provides a scheme of a video denoising system with low complexity and high quality as well. According to an actual test result, for the input video, the encoder having a denoising function can evidently improve the video image quality while saving 30+% of the code rate.

It should be noted that, the cooperation of the denoising module and the encoding module is an example according to embodiments of the disclosure. And cooperation of other methods on video denoising and other applications may be applicable to embodiments of the disclosure, and should also be included within the scope of the disclosure.

The denoising algorithm of the video-to-be-denoised includes: denoising the video-to-be-denoised by an inter-frame filtering algorithm.

Time domain noise in the video-to-be-denoised seriously affects the feeling of viewing and the compression ratio. For example, if the noise level information is relatively small (i.e., there is a little noise in the video-to-be-denoised), an inter-frame filtering algorithm is selected to denoise the video-to-be-denoised, according to a real-time demand of an application scenario. Removal of the time domain noise ensures the image quality and the compression ratio of the processed video. Denoising the video-to-be-denoised by an inter-frame filtering algorithm includes: calculating a motion index between a current frame of the video-to-be-denoised and an adjacent frame thereof, and denoising the video-to-be-denoised by the inter-frame filtering algorithm according to the motion index. In some embodiments, a motion-adaptive inter-frame denoising manner is adopted, so as to ensure the processing speed. That is, a motion index is obtained by calculating a pixel difference in corresponding positions of adjacent frames, and an inter-frame filtering weight is determined from the motion index. The smaller the motion index is, the greater the possibility that an object is stationary and a blurring image is therefore not easy to appear. And if the pixel difference in corresponding positions of adjacent frames is more than a certain threshold, points in the positions are not filtered. During the calculation of the motion index, the motion index can be determined according to differential values of pixels. For example, a current pixel in a position (i,j) of a current frame Xₙ is Yₙ(i,j), the motion index is denoted as Mₙ(i,j), and then Mn(i,j) = Yn(i,j) - Yₙ₋₁(i,j). It should be noted that, the above differential calculation may be used as a method of comparing pixel differences, and other mathematical comparison calculation methods or determinations may also be used. A filtering result from the inter-frame filtering can be obtained according to the motion index and the determined inter-frame filtering weight. And there is a mapping curve relationship between the inter-frame filtering weight and the motion index.

In some embodiments, a set of video images has 5 frames. A current frame to be filtered is the third frame. An inter-frame filtering result is obtained by performing a weighted calculation according to inter-frame filtering weights of the second frame, the third frame and the fourth frame. The inter-frame filtering weights of the second frame, the third frame and the fourth frame are denoted as S2, S3, and S4 respectively, and the corresponding pixel values are denoted as A2, A3, and A4. Therefore, the output inter-frame filtering result is (S2×A2+S3×A3+S4×A4).

It should be noted that, the previous few frames and the next few frames adjacent to the current frame may also be selected. For example, when the third frame is to be filtered, parameters of the previous two frames (the first frame and the second frame) and the next two frames (the fourth frame and the fifth frame) may be selected to calculate an inter-frame filtering result, and it is not merely limited to only using parameters of one adjacent frame both before and after the current frame to calculate the inter-frame filtering result.

After the inter-frame filtering is performed to denoise the time domain noise, the denoised filtering result is output.

After denoising the video-to-be-denoised by an inter-frame filtering algorithm, the method further includes: denoising the video-to-be-denoised by a simple intra-frame filtering algorithm; and merging denoising results of the inter-frame filtering algorithm and the simple intra-frame filtering algorithm and outputting the merged result.

According to a real-time demand of an application scenario, when the video-to-be-denoised is denoised by an inter-frame filtering algorithm, one parameter may be set to evaluate whether the inter-frame filtering meets the requirement. For example, it is required that denoising with how many points is accomplished within how much time, or an inter-frame filtering algorithm is used to denoise the previous few frames, while there is a higher requirement for the image quality or the compression ratio of the next few frames according to system demands. A denoising scheme is selected based on a denoising parameter set according to the noise level information. In this case, the denoising scheme performs denoising by a simple intra-frame filtering algorithm and an inter-frame filtering algorithm, as a complement to each other.

The simple intra-frame filtering algorithm includes filtering algorithms having low complexity and high calculation efficiency. That is, the filtering algorithms do not necessarily need complicated matching logic and may only need some simple calculation of statistical values. A mean filter and a guided filter both belong to the simple intra-frame filtering algorithm and may complement the inter-frame filtering algorithm. The final denoising result is obtained after denoising results of the inter-frame filtering algorithm and the simple intra-frame filtering algorithm are merged, and the denoising result is output.

Denoising the video-to-be-denoised by a simple intra-frame filtering algorithm includes: calculating a smoothing index in the video-to-be-denoised, and denoising the video-to-be-denoised by the simple intra-frame filtering algorithm according to the smoothing index.

When the simple intra-frame filtering algorithm and the inter-frame filtering algorithm are merged for use, a guided filter may be employed as the simple intra-frame filtering algorithm. The guided filter has high calculation efficiency, and has an excellent processing effect on a smooth region. A smoothing index in the video-to-be-denoised is calculated and the result of the simple intra-frame filtering algorithm is determined according to the smoothing index.

The inter-frame filtering algorithm has a good denoising effect for a stationary low-changing region, the simple intra-frame filtering algorithm has a good effect for the smooth region, and they can cooperate with each other to cover most of the video regions. Therefore, upon completion of the processing via the inter-frame filtering algorithm and the simple intra-frame filtering algorithm, a good denoising effect can be ensured for stationary and smooth regions.

Merging denoising results of the inter-frame filtering algorithm and the simple intra-frame filtering algorithm and outputting the merged result includes: determining denoising strength information based on the smoothing index and the motion index; and determining whether the denoising strength information is greater than a screening threshold, and if the denoising strength information is greater than or equal to a screening threshold, merging denoising results of the inter-frame filtering algorithm and the simple intra-frame filtering algorithm and outputting the merged result.

After the video-to-be-denoised has been denoised by the inter-frame filtering algorithm and the simple intra-frame filtering algorithm, denoising strength information is determined according to the smoothing index and the motion index. For example, in the weighted filtering, a denoising result is obtained by weighted merging of an inter-frame filtering result and a simple intra-frame filtering result. The greater the weight is, the stronger the filtering effect is and the greater the denoising strength is.

After the denoising strength information is obtained, whether the denoising strength information is greater than a screening threshold is determined. And if the denoising strength information is greater than or equal to a screening threshold, the denoising scheme meets the video processing demand, and the inter-frame filtering result and the simple intra-frame filtering result are merged and then the merged result is output.

After denoising the video-to-be-denoised by an inter-frame filtering algorithm, the method further includes: denoising the video-to-be-denoised by a simple intra-frame filtering algorithm; denoising the video-to-be-denoised by a complicated intra-frame filtering algorithm; and merging denoising results of the inter-frame filtering algorithm, the simple intra-frame filtering algorithm and the complicated intra-frame filtering algorithm and outputting the merged result.

As for videos having obvious noise, the noise is suppressed as much as possible on the premise of being allowed by complexity. The denoising scheme selected according to a set denoising parameter and a complexity control demand may further include: denoising the video-to-be-denoised by the complicated intra-frame filtering algorithm after the video-to-be-denoised is denoised by the inter-frame filtering algorithm and the simple intra-frame filtering algorithm.

And denoising the video-to-be-denoised by the simple intra-frame filtering algorithm includes: calculating a smoothing index in the video-to-be-denoised, and denoising the video-to-be-denoised by the simple intra-frame filtering algorithm according to the smoothing index.

The complicated intra-frame filtering algorithm refers to a filter having high complexity and requiring a great amount of match-related calculations. The complicated intra-frame filtering algorithm include a bilateral filter, a non-local mean filter, a BM3D filter, and a BM4D filter. After videos are processed by the inter-frame filtering algorithm and the simple intra-frame filtering algorithm, most of the noise remains in moving detail regions.

In this case, a part of image regions can be selected for more complicated denoising according to different demands for complexity.

For example, filtering algorithms having high complexity, such as a BM3D filter, may be selected. Therefore, matching blocks may be addressed during the processing. These matching blocks are used for filtering. A good SNR result can be obtained by strong correlation of signals and non-correlation of noise. Thus, a better denoising effect may be achieved. Finally, denoising results of the denoising algorithms are merged and then the merged result is outputted.

In some embodiments, denoising the video-to-be-denoised by a complicated intra-frame filtering algorithm includes: determining denoising strength information of each point within a current frame of the video-to-be-denoised based on the smoothing index and the motion index; and determining whether the denoising strength information is greater than a screening threshold, and if the denoising strength information is not greater than a screening threshold, denoising the current frame by the complicated intra-frame filtering algorithm.

In some embodiments, after the video-to-be-denoised is denoised by the inter-frame filtering algorithm and the simple intra-frame filtering algorithm, denoising strength information of each point is calculated according to the smoothing index and the motion index. After the denoising strength information is obtained, whether the denoising strength information is greater than a screening threshold is determined. If the denoising strength information is not greater than a screening threshold, complicated intra-frame filtering can also be required.

In some embodiments, after the determining whether the denoising strength information is greater than a screening threshold, the method further includes: making statistics on point number information of the current frame after the complicated intra-frame filtering; and determining the screening threshold based on the point number information and a system complexity parameter. In this embodiment, statistics are made on the point number information of the frame on which complicated intra-frame filtering is performed, and then the screening threshold is adjusted according to the system complexity requirement. If the calculation complexity of the frame is greater than the requirement, then the screening threshold is reduced. The screening threshold is adjusted adaptively according to real-time denoising statistical information and a system complexity parameter, to meet the denoising effect with a given complexity limitation.

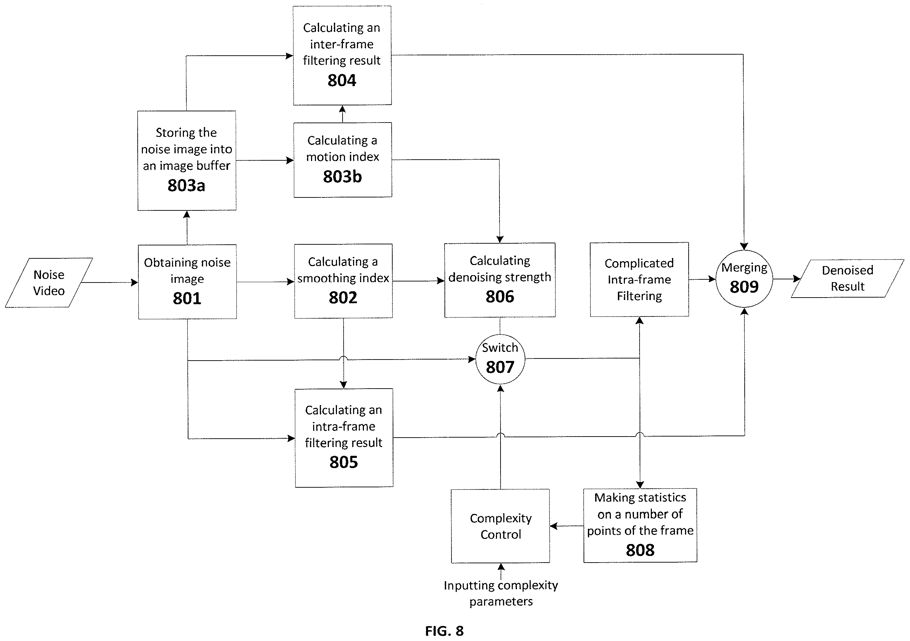

**FIG. 8** illustrates a schematic diagram of an exemplary denoising algorithm, according to some embodiments of the disclosure.

In some embodiments, three denoising algorithms may be used, and the three denoising algorithms are merged according to a certain strategy.

Steps as shown in **FIG. 8** include: (801) obtaining a noise image from an input video (or a noise video); (802) calculating a smoothing index according to the noise image; (803a) storing the noise image into an image buffer, and (803b) calculating a motion index between the frame and an adjacent frame thereof; (804) calculating an inter-frame filtering result according to the motion index; (805) calculating a simple intra-frame filtering result according to the smoothing index; (806) calculating denoising strength of each point according to the motion index and the smoothing index; (807) if the denoising strength is greater than a screening threshold, performing no subsequent processing, and otherwise, further performing a complicated intra-frame filtering; (808) making statistics on a number of points of the frame on which complicated intra-frame filtering has been performed, and adjusting the screening threshold in (807) according to the system complexity requirement; (809) merging denoising results of denoising modules for inter-frame filtering, simple intra-frame filtering, and complicated intra-frame filtering and outputting the merged result; and repeatedly processing each frame until the video ends (not shown in **FIG. 8**).

As shown in **FIG. 8**, the denoising algorithm according to some embodiments of the disclosure effectively merges several denoising filtering algorithms, and can suppress noise in stationary, smooth and detail regions. The complexity may be flexibly configured and may be automatically adjusted in real time according to videos. Under a condition of low complexity, the processing result is still good. The denoising algorithms at each phase can cooperate freely, if the denoising algorithms at different phases may complement with each other.

As discussed above, denoising according to some embodiments of the disclosure may achieve a high-quality denoising effect with low complexity. The denoising may merge some classical denoising algorithms, flexibly select and combine different denoising algorithms according to system complexity configuration, and achieve the denoising requirement with limited complexity.

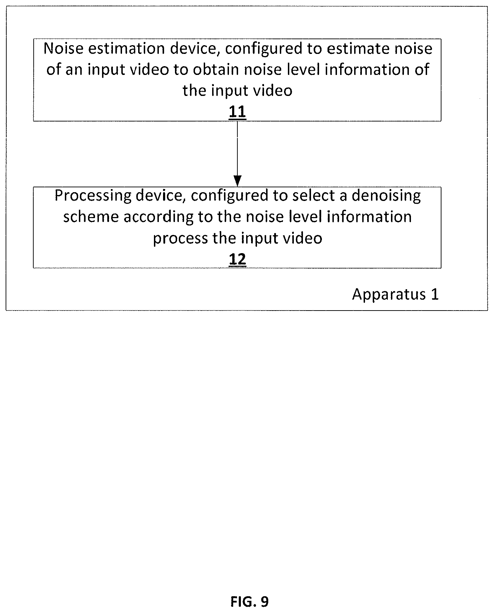

**FIG. 9** illustrates a structural schematic diagram of an exemplary video processing apparatus. The apparatus includes a noise estimation device 11 and a processing device 12. These devices (and any corresponding units) can be packaged functional hardware units (e.g., portions of an integrated circuit) designed for use with other components or a part of a program (stored on a computer readable medium) that performs a particular function, corresponding to the particular step, of related functions

Noise estimation device 11 estimates noise of an input video to obtain noise level information of the input video. Processing device 12 selects a denoising scheme corresponding to the noise level information process the input video.

Apparatus 1 may include but is not limited to any mobile electronic product that may interact with a user via a touch screen, such as a smart phone, a PDA, and the like. The mobile electronic product may employ any operating system, such as an Android operating system, an iOS operating system, and the like. In some embodiments, apparatus 1 may include a script program running on a user apparatus or an apparatus consisting of the user apparatus and a network device or a touch end device connected via the network. It is appreciated that, apparatus 1 described above is merely an example, and any apparatus functions similarly falls within the scope of the disclosure.

The above-described devices work continuously with each other. It is appreciated that, "continuously" indicates each of the devices works in real time or according to a work pattern that is preset or adjusted in real time.

The apparatus for video processing provided by some embodiments of the disclosure processes input video based on a denoising scheme corresponding to noise level information generated by performing a noise estimation on the input video. The denoising scheme merge many denoising algorithms to provide an excellent denoising effect.

In some embodiments, a video processing system may be provided in apparatus 1. **FIG. 2** is a schematic diagram of such an exemplary video processing system according to some embodiments of the disclosure. The video processing system includes denoising input module 201, noise estimation module 203, noise elimination module 205, complexity control module 207, and denoising output module 209, all of which were discussed above.

These modules in the video processing system cooperate with each other to accomplish denoising work of an input video. For example, after the denoising input module 201 acquires an input video, the noise estimation module 203 performs noise estimation on the input video to obtain noise level information, and the noise elimination module 205 selects a denoising scheme according to the noise level information and system complexity control, to perform a reasonable and efficient noise elimination process on the input video, and outputs the denoised video. The video processing system supports customization of complexity, and flexibly adjusts the denoising scheme and a denoising algorithm in the denoising scheme according to a relationship between actual complexity and preset values during the processing, therefore meeting the best denoising requirement under a limited complexity and improving a compression ratio and compression quality of the input video. These modules (and any corresponding sub-modules or sub-units) can be packaged functional hardware units (e.g., portions of an integrated circuit) designed for use with other components or a part of a program (stored on a computer readable medium) that performs a particular function, corresponding to the particular step, of related functions.

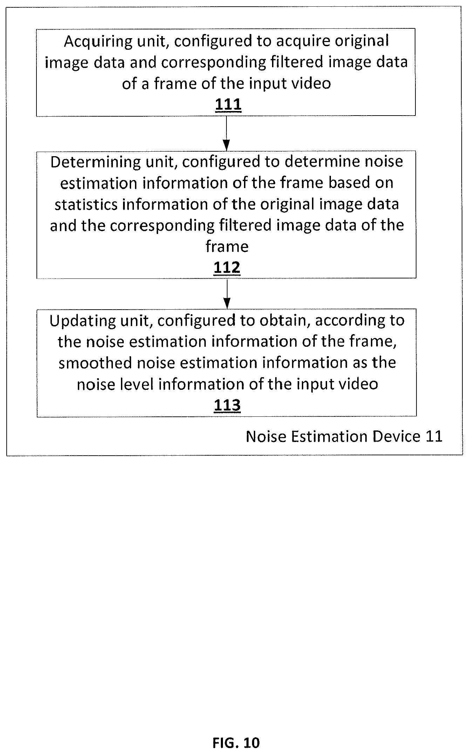

**FIG. 10** illustrates a structural schematic diagram of noise estimation device 11, according to some embodiments of the disclosure.

Noise estimation device 11 may include an acquiring unit 111, a determining unit 112, and an updating unit 113.

Acquiring unit 111 may acquire original image data and corresponding filtered image data of a frame of a plurality of frames from the input video.

Determining unit 112 may determine noise estimation information of the frame based on statistics information of the original image data and the corresponding filtered image data of the frame.

Updating unit 113 may obtain, according to the noise estimation information of the frame, smoothed noise estimation information as the noise level information of the input video.

If it can be distinguished during the noise estimation that whether the extracted high frequency energy is a signal or noise, the accuracy of the noise estimation will be improved. In some embodiments, high frequency components of video content can contain more energy after a low-pass filtering. In some embodiments, original image data and corresponding filtered image data of a frame of an input video are obtained through an input video. A mathematical calculation is performed on the original image data and the corresponding filtered image data of the frame. For example, a block variance calculation can be performed to obtain corresponding statistics information. And noise estimation information of the frame can be determined by comparing statistics information of the original image data and the corresponding filtered image data of the frame. Since the result of single-frame noise estimation has a large jitter near a true value, it is inaccurate if single-frame noise estimation information is used as noise estimation of the input video. Thus, an error of noise estimation can be reduced by multi-frame joint estimation, and the result of a multi-frame noise estimation is given by merging single-frame noise levels. For example, a relatively smooth estimation value is obtained by effectively estimating an average of single-frame noise levels within a time window, significantly improving accuracy and robustness of the noise estimation.

In some embodiments, determining unit 112 may be configured to perform a block variance calculation on the original image data and the corresponding filtered image data of the frame respectively, to obtain corresponding original statistics information and processing statistics information; and comparing the original statistics information of the frame with the processing statistics information, to determine the noise estimation information of the frame.

For example, determining unit 112 may determine noise estimation information according to the exemplary noise estimation algorithm of **FIG. 4**, which illustrates a flow chart of a noise estimation algorithm, according to some embodiments of the disclosure. Noise (original) image data and filtered image data are acquired according to the input video, and a block variance calculation is performed on the original image data and the corresponding filtered image data of each frame respectively. For example, a result of the block variance calculation on the original image data is denoted as V1, a result of the block variance calculation on the filtered image data is denoted as V2. The statistics information may be a block variance, and may also be other statistics obtained from the block variance. Y1 is compared with V2 to obtain noise estimation information of the corresponding frame. A differential comparison may be made upon comparison, for example, |V1-V2|, and the differential result |V1-V2| is then compared with a threshold to obtain single-frame noise estimation. The single-frame noise levels (e.g., the single-frame noise estimation) may also be estimated according to changes of a statistics distribution curve obtained from the calculated block variance, as shown in **FIG. 5**.

**FIG. 5** illustrates a schematic diagram of changes of a statistics distribution curve of block variance according to some embodiments of the disclosure. On the left side of **FIG. 5** is a block variance histogram distribution of real noise, on the right side is a block variance histogram distribution of a detailed image. As it can be seen from **FIG. 5**, after filtering, block variance distribution of the real noise may move to a region of Value 0, and the change of the amplitude is evident; while the change of block variance distribution of the detailed image is little. Whether the extracted high frequency energy is a signal or noise can be distinguished through changes of a statistics distribution curve of the original image data and the filtered image data, therefore improving the accuracy of estimation of single-frame noise levels. It should be noted that, the detailed image is an image with a greater region variance. For example, the detailed image may be an image containing an edge of a tree, grass or an object.

Processing device 12 is configured to select a denoising scheme corresponding to the noise level information to process the input video by: comparing the noise level information with a preset denoising threshold, to determine whether the input video is a video-to-be-denoised; if the input video is not a video-to-be-denoised, the denoising scheme directly outputting the input video, and if the input video is a video-to-be-denoised, the denoising scheme selecting a corresponding denoising algorithm of the video-to-be-denoised according to the noise level information.

Processing device 12 selects a denoising scheme corresponding to the noise level information to process the input video according to the processing algorithm of **FIG. 6**, which illustrates a schematic diagram of an exemplary processing of an input video.

As shown in **FIG. 6**, according to the result of the noise estimation, videos without noise or with a little noise are not denoised (e.g., bypassed), and the input video is directly output. As for videos with a small amount of noise, simple and rapid denoising is performed. And as for videos with obvious noise, noise is suppressed as much as possible on the premise of being allowed by complexity.

When determining whether the input video is a video-to-be-denoised, the noise level information is compared with a preset denoising threshold. An estimation threshold is set according to the noise level information. Statistics is made on a total number of frames having single-frame noise level greater than the estimation threshold in the noise estimation information. Next, whether the total number of frames is greater than a preset denoising threshold (a number threshold) is determined. And if the total number of frames is greater than a preset denoising threshold, the input video is determined as the video-to-be-denoised. When the input video is not a video-to-be-denoised, the denoising scheme directly outputs the input video. And when the input video is determined as the video-to-be-denoised, the denoising scheme maximizes a denoising effect according to automatic complexity limitations. During a denoising process, denoising algorithms with different complexity are selected according to the noise level information to denoise the video-to-be-denoised.

It is appreciated that, the comparing the total number of frames with a preset denoising threshold is merely an illustrated method of determining whether an input video is a video-to-be-denoised.

In some embodiments, processing device 12 may be further configured to: determine a denoising parameter of the video-to-be-denoised according to the noise level information; and determine the denoising algorithm of the video-to-be-denoised according to the denoising parameter.

When the video-to-be-denoised is denoised, a reasonable denoising parameter is determined according to noise level information of the video-to-be-denoised at first. Then, a denoising scheme merged from one or more denoising algorithms is determined according to the denoising parameter.

In some embodiments, processing device 12 may be configured to: determine the denoising parameter of the video-to-be-denoised according to the noise level information and encoder information, as further discussed with reference to **FIG. 7**.

**FIG. 7** illustrates a schematic diagram of an exemplary denoising module in cooperation with an encoder, according to some embodiments of the disclosure. The denoising module and the encoding module may cooperate with each other. For example, noise level information of the denoising module can assist the encoding module in setting a quantization adjustment strategy, a rate distortion optimization strategy, a mode selection strategy and the like. The encoder information may also be used to assist denoising. For example, an encoded quantization parameter value may guide denoising strength of the denoising module. If the quantization parameter value is great, the tolerance for blurring of the denoised image is also great. A reasonable denoising parameter can be set by a code rate, quantization information and the like of the encoder, to achieve the aim of controlling the code rate, suppressing encoding noise (block noise) and so on.

The system according to some embodiments of the disclosure provides a denoising module cooperating with an encoder, so as to improve the processing effect of the encoder on the input video. The encoder in the system is an encoder having a video denoising function. The system provides some schemes of denoising in cooperation with encoding processing, and provides a scheme of a video denoising system with low complexity and high quality as well. According to an actual test result, for the input video, the encoder having a denoising function can evidently improve the video image quality while saving 30+% of the code rate.

It should be noted that, the cooperation of the denoising module and the encoding module is an example according to embodiments of the disclosure. And cooperation of other methods on video denoising and other application may be applicable to embodiments of the disclosure, and should also be included within the scope of the disclosure.

In some embodiments, processing device 12 may be configured to denoise the video-to-be-denoised by an inter-frame filtering algorithm.

Time domain noise in the video-to-be-denoised seriously affects the feeling of viewing and the compression ratio. For example, if the noise level information is relatively small (i.e., there is a little noise in the video-to-be-denoised), an inter-frame filtering algorithm can be selected to denoise the video-to-be-denoised, according to a real-time demand of an application scenario. Removal of the time domain noise ensures the image quality and the compression ratio of the processed video.

Processing device 12 is configured to calculate a motion index between a current frame of the video-to-be-denoised and an adjacent frame thereof, and denoise the video-to-be-denoised by the inter-frame filtering algorithm according to the motion index.

In some embodiments, a motion-adaptive inter-frame denoising manner is adopted, so as to ensure the processing speed. That is, a motion index is obtained by calculating a pixel difference in corresponding positions of adjacent frames, and an inter-frame filtering weight is determined from the motion index. The smaller the motion index is, the greater the possibility that an object is stationary and a blurring image is therefore not easy to appear. And if the pixel difference in corresponding positions of adjacent frames is more than a certain threshold, points in the positions are not filtered. During the calculation of the motion index, the motion index can be determined according to differential values of pixels. For example, a current pixel in a position (i,j) of a current frame Xₙ is Yₙ(i,j), the motion index is denoted as Mn(i,j), and then Mn(i,j) = Yₙ(i,j) - Yₙ₋₁(i,j). It should be noted that, the above differential calculation may be used as a method of comparing pixel differences, and other mathematical comparison calculation methods may also be used. A filtering result from the inter-frame filtering can be obtained according to the motion index and the determined inter-frame filtering weight. And there is a mapping curve relationship between the inter-frame filtering weight and the motion index.

In some embodiments, a set of video images has 5 frames. A current frame to be filtered is the third frame. An inter-frame filtering result is obtained by performing a weighted calculation according to inter-frame filtering weights of the second frame, the third frame and the fourth frame. The inter-frame filtering weights of the second frame, the third frame and the fourth frame are denoted as S2, S3 and S4 respectively, and the corresponding pixel values are denoted as A2, A3 and A4.

Therefore, the output inter-frame filtering result is (S2×A2+S3×A3+S4×A4).

It should be noted that, the previous few frames and the next few frames adjacent to the current frame may also be selected. For example, when the third frame is to be filtered, parameters of the previous two frames (the first frame and the second frame) and the next two frames (the fourth frame and the fifth frame) may be selected to calculate an inter-frame filtering result, and it is not merely limited to only using parameters of one adjacent frame both before and after the current frame to calculate the inter-frame filtering result.

After the inter-frame filtering is performed to denoise the time domain noise, the denoised filtering result is output.

After denoising the video-to-be-denoised by an inter-frame filtering algorithm, processing device 12 is configured to: denoise the video-to-be-denoised by a simple intra-frame filtering algorithm; and merge denoising results of the inter-frame filtering algorithm and the simple intra-frame filtering algorithm and outputting the merged result.

According to a real-time demand of an application scenario, when the video-to-be-denoised is denoised by an inter-frame filtering algorithm, one parameter may be set to evaluate whether the inter-frame filtering meets the requirement. For example, it is required that denoising with how many points is accomplished within how much time, or an inter-frame filtering algorithm is used to denoise the previous few frames, while there is a higher requirement for the image quality or the compression ratio of the next few frames according to system demands. A denoising scheme is selected based on a denoising parameter set according to the noise level information. In this case, the denoising scheme performs denoising by a simple intra-frame filtering algorithm and an inter-frame filtering algorithm, as a complement to each other.

The simple intra-frame filtering algorithm includes filtering algorithms having low complexity and high calculation efficiency. That is, the filtering algorithms do not need complicated matching logic and only need some simple calculation of statistical values. For example, a mean filter and a guided filter both belong to the simple intra-frame filtering algorithm and may complement the inter-frame filtering algorithm. The final denoising result is obtained after denoising results of the inter-frame filtering algorithm and the simple intra-frame filtering algorithm are merged, and the denoising result is output.

Processing device 12 is configured to calculate a smoothing index in the video-to-be-denoised, and denoise the video-to-be-denoised by the simple intra-frame filtering algorithm according to the smoothing index.

When the simple intra-frame filtering algorithm and the inter-frame filtering algorithm are merged for use, a guided filter may be employed as the simple intra-frame filtering algorithm. The guided filter has high calculation efficiency, and has an excellent processing effect on a smooth region. A smoothing index in the video-to-be-denoised is calculated and the result of the simple intra-frame filtering algorithm is determined according to the smoothing index.

The inter-frame filtering algorithm has a good denoising effect for a stationary low-changing region, the simple intra-frame filtering algorithm has a good effect for the smooth region, and they can cooperate with each other to cover most of the video regions. Therefore, upon completion of the processing via the inter-frame filtering algorithm and the simple intra-frame filtering algorithm, a good denoising effect can be ensured for stationary and smooth regions.

Processing device 12 is configured to determine denoising strength information based on the smoothing index and the motion index; and determine whether the denoising strength information is greater than a screening threshold, and if the denoising strength information is greater than or equal to a screening threshold, merge denoising results of the inter-frame filtering algorithm and the simple intra-frame filtering algorithm and output the merged result.

After the video-to-be-denoised has been denoised by the inter-frame filtering algorithm and the simple intra-frame filtering algorithm, denoising strength information is determined according to the smoothing index and the motion index. For example, in the weighted filtering, a denoising result is obtained by weighted merging of an inter-frame filtering result and a simple intra-frame filtering result. The greater the weight is, the stronger the filtering effect is and the greater the denoising strength is.

After the denoising strength information is obtained, whether the denoising strength information is greater than a screening threshold is determined, and if the denoising strength information is greater than or equal to a screening threshold is determined, it indicates that the denoising scheme meets the video processing demand, and the inter-frame filtering result and the simple intra-frame filtering result are merged and then the merged result is output.

After denoising the video-to-be-denoised by an inter-frame filtering algorithm, processing device 12 is configured to denoise the video-to-be-denoised by a simple intra-frame filtering algorithm; denoise the video-to-be-denoised by a complicated intra-frame filtering algorithm; and merge denoising results of the inter-frame filtering algorithm, the simple intra-frame filtering algorithm and the complicated intra-frame filtering algorithm and outputting the merged result.

As for videos having obvious noise, the noise is suppressed as much as possible on the premise of being allowed by complexity. The denoising scheme selected according to a set denoising parameter and a complexity control demand may further include: denoising the video-to-be-denoised by the complicated intra-frame filtering algorithm after the video-to-be-denoised is denoised by the inter-frame filtering algorithm and the simple intra-frame filtering algorithm.

And denoising the video-to-be-denoised by the simple intra-frame filtering algorithm includes: calculating a smoothing index in the video-to-be-denoised, and denoising the video-to-be-denoised by the simple intra-frame filtering algorithm according to the smoothing index.

The complicated intra-frame filtering algorithm refers to a filter having high complexity and requiring a great amount of match-related calculation. The complicated intra-frame filtering algorithm include a bilateral filter, a non- local mean filter, a BM3D filter, and a BM4D filter. After videos are processed by the inter-frame filtering algorithm and the simple intra-frame filtering algorithm, most of the noise remains in moving detail regions.

In this case, a part of image regions can be selected for more complicated denoising according to different demands for complexity.

For example, filtering algorithms having high complexity, such as a BM3D filter, are selected. Therefore, matching blocks may be addressed during the processing. These matching blocks are used for filtering. A good SNR result can be obtained by strong correlation of signals and non-correlation of noise. Thus, a better denoising effect may be achieved. Finally, denoising results of the denoising algorithms are merged and then the merged result is output.

Processing device 12 may be configured to determine denoising strength information of each point within a current frame of the video-to-be-denoised based on the smoothing index and the motion index; and determine whether the denoising strength information is greater than a screening threshold, and if the denoising strength information is not greater than a screening threshold, denoise the current frame by the complicated intra-frame filtering algorithm.

After the video-to-be-denoised is denoised by the inter-frame filtering algorithm and the simple intra-frame filtering algorithm, denoising strength information of each point is calculated according to the smoothing index and the motion index. After the denoising strength information is obtained, whether the denoising strength information is greater than a screening threshold is determined. If the denoising strength information is not greater than a screening threshold, complicated intra-frame filtering is also required.

In some embodiments, processing device 12 may be further configured to make statistics on point number information of the current frame after the complicated intra-frame filtering; and determine the screening threshold based on the point number information and a system complexity parameter. In this embodiment, statistics is made on the point number information of the frame on which complicated intra-frame filtering is performed, and then the screening threshold is adjusted according to the system complexity requirement. If the calculation complexity of the frame is greater than the requirement, then the screening threshold is reduced. The screening threshold is adjusted adaptively according to real-time denoising statistical information and a system complexity parameter, to meet the denoising effect with a given complexity limitation.

For example, processing device 12 may process an original video or input video according to the exemplary denoising algorithm of FIG. 8, which illustrates a schematic diagram of an exemplary denoising algorithm, according to some embodiments of the disclosure.

In some embodiments, three denoising algorithms may be used, and the three denoising algorithms are merged according to a certain strategy.

Steps as shown in **FIG. 8** include: (801) obtaining a noise image from an input video (or a noise video); (802) calculating a smoothing index according to the noise image; (803a) storing the noise image into an image buffer, and (803b) calculating a motion index between the frame and an adjacent frame thereof; (804) calculating an inter-frame filtering result according to the motion index; (805) calculating a simple intra-frame filtering result according to the smoothing index; (806) calculating denoising strength of each point according to the motion index and the smoothing index; (807) if the denoising strength is greater than a screening threshold, performing no subsequent processing, and otherwise, further performing a complicated intra-frame filtering; (808) making statistics on a number of points of the frame on which complicated intra-frame filtering has been performed, and adjusting the screening threshold in (807) according to the system complexity requirement; (809) merging denoising results of denoising modules for inter-frame filtering, simple intra-frame filtering, and complicated intra-frame filtering and outputting the merged result; and (810) repeatedly processing each frame until the video ends (not shown in **FIG.8**).

As shown in **FIG. 8**, the denoising processing according to some embodiments of the disclosure effectively merges several denoising filtering algorithms, and can suppress noise in stationary, smooth and detail regions. The complexity may be flexibly configured and may be automatically adjusted in real time according to videos. Under a condition of low complexity, the processing result is still good. The denoising algorithms at each phase can cooperate freely, if the denoising algorithms at different phases may complement with each other.

As discussed above, denoising of the disclosure may achieve a high-quality denoising effect with low complexity. The denoising merge some classical denoising algorithms, flexibly select and combine different denoising algorithms according to system complexity configuration, and achieve the denoising requirement with limited complexity.

It is appreciated that, various exemplary logic blocks, modules, circuits, and algorithm steps described with reference to the disclosure herein may be implemented as specialized electronic hardware, computer software, or a combination of electronic hardware and computer software. For examples, the modules/units may be implemented by a processor executing software instructions stored in the computer-readable storage medium.

The flowcharts and block diagrams in the accompanying drawings show system architectures, functions, and operations of possible implementations of the system and method according to multiple embodiments of the present invention. In this regard, each block in the flowchart or block diagram may represent one module, one program segment, or a part of code, where the module, the program segment, or the part of code includes one or more executable instructions used for implementing specified logic functions. It should also be noted that, in some alternative implementations, functions marked in the blocks may also occur in a sequence different from the sequence marked in the drawing. For example, two consecutive blocks may be substantially executed in parallel, and sometimes, they may also be executed in the reverse order, depending on the functions involved. Each block in the block diagram and/or flowchart, and a combination of blocks in the block diagram and/or flowchart, may be implemented by a dedicated hardware-based system for executing corresponding functions or operations, or may be implemented by a combination of dedicated hardware and computer instructions.

It is appreciated that embodiments of the present disclosure may be embodied as a method, a system or a computer program product. Accordingly, embodiments of the present disclosure may take the form of an entirely hardware embodiment, an entirely software embodiment or an embodiment combining software and hardware for allowing specialized components to perform the functions described above. Furthermore, embodiments of the present disclosure may take the form of a computer program product embodied in one or more computer-readable storage media (including but not limited to a magnetic disk memory, a CD-ROM, an optical memory, etc.) containing computer-readable program codes.

Embodiments of the present disclosure are described with reference to flow diagrams and/or block diagrams of methods, devices (systems), and computer program products according to embodiments of the present disclosure. It will be understood that each flow and/or block of the flow diagrams and/or block diagrams, and combinations of flows and/or blocks in the flow diagrams and/or block diagrams, may be implemented by computer program instructions. These computer program instructions may be provided to a processor of a computer, an embedded processor, or other programmable data processing devices to produce a machine, such that the instructions, which are executed via the processor of the computer or other programmable data processing devices, create a means for implementing the functions specified in one or more flows in the flow diagrams and/or one or more blocks in the block diagrams.

These computer program instructions may also be stored in a computer-readable memory that may direct a computer or other programmable data processing devices to function in a particular manner, such that the instructions stored in the computer-readable memory produce a manufactured product including an instruction means that implements the functions specified in one or more flows in the flow diagrams and/or one or more blocks in the block diagrams.

These computer program instructions may also be loaded onto a computer or other programmable data processing devices to cause a series of operational steps to be performed on the computer or other programmable devices to produce processing implemented by the computer, such that the instructions which are executed on the computer or other programmable devices provide steps for implementing the functions specified in one or more flows in the flow diagrams and/or one or more blocks in the block diagrams. In a typical configuration, a computer device includes one or more Central Processing Units (CPUs), an input/output interface, a network interface, and a memory. The memory may include forms of a volatile memory, a random access memory (RAM), and/or non-volatile memory and the like, such as a read-only memory (ROM) or a flash RAM in a computer-readable storage medium. The memory is an example of the computer-readable storage medium.

The computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The computer-readable medium includes non-volatile and volatile media, and removable and non-removable media, wherein information storage may be implemented with any method or technology. Information may be modules of computer-readable instructions, data structures and programs, or other data. Examples of a non-transitory computer-readable medium include but are not limited to a phase-change random access memory (PRAM), a static random access memory (SRAM), a dynamic random access memory (DRAM), other types of random access memories (RAMs), a read-only memory (ROM), an electrically erasable programmable read-only memory (EEPROM), a flash memory or other memory technologies, a compact disc read-only memory (CD-ROM), a digital versatile disc (DVD) or other optical storage, a cassette tape, tape or disk storage or other magnetic storage devices, a cache, a register, or any other non-transmission media that may be used to store information capable of being accessed by a computer device. The computer-readable storage medium is non-transitory, and does not include transitory media, such as modulated data signals and carrier waves.

It will be appreciated that the present invention is not limited to the exact construction that has been described above and illustrated in the accompanying drawings, and that various modifications and changes may be made without departing from the scope thereof. Rather, the scope of the invention is defined by the appended claims.

## Claims

1. A computer-implemented method for video processing, comprising:
estimating (S11) noise of an input video to obtain noise level information of the input video; and
selecting (S12), according to the noise level information, a denoising scheme to process the input video by:
comparing the noise level information with a preset denoising threshold, to determine whether the input video is a video-to-be-denoised;
in response to determining that the input video is not a video-to-be-denoised, selecting the denoising scheme of directly outputting the input video,
and otherwise selecting a denoising algorithm of the video-to-be-denoised according to the noise level information, the denoising algorithm comprising:
calculating a motion index between a current frame of the video-to-be-denoised and an adjacent frame of the current frame;
denoising the video-to-be-denoised by an inter-frame filtering algorithm according to the motion index;
**characterised by** the denoising algorithm further comprising:
calculating a smoothing index in the video-to-be-denoised according to the current frame;
denoising the video-to-be-denoised by a simple intra-frame filtering algorithm according to the smoothing index, the simple intra-frame filtering algorithm selected from among a mean filter and a guided filter,
determining a denoising strength based on the smoothing index and the motion index;
determining whether the denoising strength is greater than a screening threshold;
in response to the denoising strength being greater than the screening threshold, merging the denoising results of the inter-frame filtering algorithm and the simple intra-frame filtering algorithm,
and otherwise: denoising the video-to-be-denoised by a complicated intra-frame filtering algorithm selected from among a bilateral filter, a non-local mean filter, a BM3D filter, and a BM4D filter, and merging denoising results of the inter-frame filtering algorithm, the simple intra-frame filtering algorithm, and the complicated intra-frame filtering algorithm; and
outputting the merged result.

2. The method according to claim 1, wherein estimating noise of an input video to obtain noise level information of the input video further comprises:
acquiring original image data and corresponding filtered image data of the input video;
determining noise estimation information of a set of frames of the video input based on statistics information of the original image data and the corresponding filtered image data; and
obtaining smoothed noise estimation information according to the noise estimation information of each frame of the set of frames, and using the smoothed noise estimation information as the noise level information of the input video.

3. The method according to claim 2, wherein determining noise estimation information of the set of frames of the input video based on statistics information of the original image data and the corresponding filtered image data further comprises:
performing a block variance calculation on the original image data and the corresponding filtered image data respectively, to obtain corresponding original statistics information and processing statistics information; and
comparing the original statistics information with the processing statistics information, to determine the noise estimation information of the set of frames.

4. The method according to any of claim 1-3, wherein selecting a denoising algorithm of the video-to-be-denoised according to the noise level information further comprises:
determining a denoising parameter of the video-to-be-denoised according to the noise level information; and
determining the denoising algorithm of the video-to-be-denoised according to the denoising parameter.

5. The method according to claim 4, wherein determining the denoising parameter of the video-to-be-denoised according to the noise level information further comprises:
determining the denoising parameter of the video-to-be-denoised according to the noise level information and encoder information.

6. The method according to any one of claims 1-5, wherein, after determining whether the denoising strength is greater than a screening threshold, the method further comprises:
making statistics on a number of points of the current frame after the complicated intra-frame filtering algorithm; and
adjusting the screening threshold based on the statistics and a system complexity parameter such that if the calculation complexity of the frame is greater than the parameter, then the screening threshold is reduced.

7. A video processing apparatus (1), comprising:
a noise estimation device (11) used for estimating noise of an input video to obtain noise level information of the input video; and
a processing device (12) used for selecting, according to the noise level information, a denoising scheme to process the input video;
wherein the noise estimation device (11) and the processing device (12) are further configured to perform the method according to any one of claims 1-6.

8. A computer-readable medium that stores a set of instructions that, when executed by at least one processor of a video processing apparatus (1), cause the video processing apparatus (1) to perform the method for video processing according to any one of claims 1-6.

## Patentansprüche

1. Computerimplementiertes Verfahren zum Videoverarbeiten, umfassend:
Schätzen (S11) von Rauschen eines Eingangsvideos, um Rauschpegelinformationen des Eingangsvideos zu erhalten; und
Auswählen (S12), gemäß den Rauschpegelinformationen, eines Entrauschungsschemas zum Verarbeiten des Eingangsvideos durch:
Vergleichen der Rauschpegelinformationen mit einem voreingestellten Entrauschungsschwellenwert, um zu bestimmen, ob das Eingangsvideo ein zu entrauschendes Video ist;
als Reaktion auf das Bestimmen, dass das Eingangsvideo kein zu entrauschendes Video ist, Auswählen des Entrauschungsschemas zum direkten Ausgeben des Eingangsvideos, und andernfalls Auswählen eines Entrauschungsalgorithmus des zu entrauschenden Videos gemäß den Rauschpegelinformationen, wobei der Entrauschungsalgorithmus umfasst:
Berechnen eines Bewegungsindex zwischen einem aktuellen Frame des zu entrauschenden Videos und einem benachbarten Frame des aktuellen Frames;
Entrauschen des zu entrauschenden Videos durch einen Inter-Frame-Filteralgorithmus gemäß dem Bewegungsindex;
**dadurch gekennzeichnet, dass** der Entrauschungsalgorithmus ferner umfasst:
Berechnen eines Glättungsindex in dem zu entrauschenden Video gemäß dem aktuellen Frame;
Entrauschen des zu entrauschenden Videos durch einen einfachen Intra-Frame-Filteralgorithmus gemäß dem Glättungsindex, wobei der einfache Intra-Frame-Filteralgorithmus aus einem Mittelwertfilter und einem geführten Filter ausgewählt ist,
Bestimmen einer Entrauschungsstärke basierend auf dem Glättungsindex und dem Bewegungsindex;
Bestimmen, ob die Entrauschungsstärke größer als ein Screening-Schwellenwert ist;
als Reaktion darauf, dass die Entrauschungsstärke größer als der Screening-Schwellenwert ist, Zusammenführen der Entrauschungsergebnisse des Inter-Frame-Filteralgorithmus und des einfachen Intra-Frame-Filteralgorithmus,
und andernfalls: Entrauschen des zu entrauschenden Videos durch einen komplizierten Intra-Frame-Filteralgorithmus, der aus einem bilateralen Filter, einem nichtlokalen Mittelwertfilter, einem BM3D-Filter und einem BM4D-Filter ausgewählt ist, und Zusammenführen von Entrauschungsergebnissen des Inter-Frame-Filteralgorithmus, des einfachen Intra-Frame-Filteralgorithmus und des komplizierten Intra-Frame-Filteralgorithmus;
und
Ausgeben des zusammengeführten Ergebnisses.

2. Verfahren nach Anspruch 1, wobei das Schätzen von Rauschen eines Eingangsvideos zum Erhalten von Rauschpegelinformationen des Eingangsvideos ferner umfasst:
Erfassen von Originalbilddaten und entsprechenden gefilterten Bilddaten des Eingangsvideos;
Bestimmen von Rauschschätzungsinformationen eines Satzes von Frames der Videoeingabe basierend auf Statistikinformationen der Originalbilddaten und der entsprechenden gefilterten Bilddaten; und
Erhalten geglätteter Rauschschätzungsinformationen gemäß den Rauschschätzungsinformationen jedes Frames des Satzes von Frames und Verwenden der geglätteten Rauschschätzungsinformationen als die Rauschpegelinformationen des Eingangsvideos.

3. Verfahren nach Anspruch 2, wobei das Bestimmen von Rauschschätzungsinformationen des Satzes von Frames des Eingangsvideos basierend auf Statistikinformationen der Originalbilddaten und der entsprechenden gefilterten Bilddaten ferner umfasst:
Durchführen einer Blockvarianzberechnung an den Originalbilddaten beziehungsweise den entsprechenden gefilterten Bilddaten, um entsprechende Originalstatistikinformationen und Verarbeitungsstatistikinformationen zu erhalten; und
Vergleichen der Originalstatistikinformationen mit den Verarbeitungsstatistikinformationen, um die Rauschschätzungsinformationen des Satzes von Frames zu bestimmen.

4. Verfahren nach einem der Ansprüche 1-3, wobei das Auswählen eines Entrauschungsalgorithmus des zu entrauschenden Videos gemäß den Rauschpegelinformationen ferner umfasst:
Bestimmen eines Entrauschungsparameters des zu entrauschenden Videos gemäß den Rauschpegelinformationen; und
Bestimmen des Entrauschungsalgorithmus des zu entrauschenden Videos gemäß dem Entrauschungsparameter.

5. Verfahren nach Anspruch 4, wobei das Bestimmen des Entrauschungsparameters des zu entrauschenden Videos gemäß den Rauschpegelinformationen ferner umfasst:
Bestimmen des Entrauschungsparameters des zu entrauschenden Videos gemäß den Rauschpegelinformationen und Codiererinformationen.

6. Verfahren nach einem der Ansprüche 1-5, wobei nach dem Bestimmen, ob die Entrauschungsstärke größer als ein Screening-Schwellenwert ist, das Verfahren ferner umfasst:
Erstellen von Statistiken über eine Anzahl von Punkten des aktuellen Frames nach dem komplizierten Intra-Frame-Filteralgorithmus; und
Anpassen des Screening-Schwellenwerts basierend auf den Statistiken und einem Systemkomplexitätsparameter, so dass, wenn die Berechnungskomplexität des Frames größer als der Parameter ist, der Screening-Schwellenwert dann reduziert wird.

7. Videoverarbeitungseinrichtung (1), umfassend:
eine Rauschschätzungsvorrichtung (11), die zum Schätzen von Rauschen eines Eingangsvideos verwendet wird, um Rauschpegelinformationen des Eingangsvideos zu erhalten; und
eine Verarbeitungsvorrichtung (12), die zum Auswählen eines Entrauschungsschemas zum Verarbeiten des Eingangsvideos gemäß den Rauschpegelinformationen verwendet wird;
wobei die Rauschschätzungsvorrichtung (11) und die Verarbeitungsvorrichtung (12) ferner dazu konfiguriert sind, das Verfahren nach einem der Ansprüche 1-6 durchzuführen.

8. Computerlesbares Medium, das einen Satz von Anweisungen speichert, die, wenn sie von mindestens einem Prozessor einer Videoverarbeitungseinrichtung (1) ausgeführt werden, die Videoverarbeitungseinrichtung (1) veranlassen, das Verfahren zum Videoverarbeiten nach einem der Ansprüche 1-6 durchzuführen.

## Revendications

1. Procédé mis en œuvre par ordinateur pour traitement de vidéo, comprenant :
l'estimation (S11) du bruit d'une vidéo d'entrée pour obtenir des informations de niveau de bruit de la vidéo d'entrée ; et
la sélection (S12), en fonction des informations de niveau de bruit, d'un schéma de débruitage pour traiter la vidéo d'entrée par :
la comparaison des informations de niveau de bruit à un seuil de débruitage prédéfini, pour déterminer si la vidéo d'entrée est une vidéo à débruiter ;
en réponse à la détermination que la vidéo d'entrée n'est pas une vidéo à débruiter, la sélection du schéma de débruitage de sortie directe de la vidéo d'entrée,
et par ailleurs la sélection d'un algorithme de débruitage de la vidéo à débruiter en fonction des informations de niveau de bruit, l'algorithme de débruitage comprenant :
le calcul d'un indice de mouvement entre une trame courante de la vidéo à débruiter et une trame adjacente de la trame courante ;
le débruitage de la vidéo à débruiter par un algorithme de filtrage inter-trame en fonction de l'indice de mouvement ;
**caractérisé par** l'algorithme de débruitage comprenant en outre :
le calcul d'un indice de lissage dans la vidéo à débruiter en fonction de la trame courante ;
le débruitage de la vidéo à débruiter par un algorithme de filtrage intra-trame simple en fonction de l'indice de lissage, l'algorithme de filtrage intra-trame simple étant sélectionné parmi un filtre moyen et un filtre guidé,
la détermination d'une intensité de débruitage sur la base de l'indice de lissage et de l'indice de mouvement ;
la détermination pour savoir si l'intensité de débruitage est supérieure à un seuil de criblage ;
en réponse à l'intensité de débruitage qui est supérieure au seuil de criblage, la fusion des résultats de débruitage de l'algorithme de filtrage inter-trame et de l'algorithme de filtrage intra-trame simple,
et par ailleurs : le débruitage de la vidéo à débruiter par un algorithme de filtrage intra-trame compliqué sélectionné parmi un filtre bilatéral, un filtre moyen non local, un filtre BM3D et un filtre BM4D, et la fusion des résultats de débruitage de l'algorithme de filtrage inter-trame, de l'algorithme de filtrage intra-trame simple et de l'algorithme de filtrage intra-trame compliqué ; et
la production du résultat fusionné.

2. Procédé selon la revendication 1, ladite estimation du bruit d'une vidéo d'entrée pour obtenir des informations de niveau de bruit de la vidéo d'entrée comprenant en outre :
l'acquisition de données d'image originales et de données d'image filtrées correspondantes de la vidéo d'entrée ;
la détermination d'informations d'estimation de bruit d'un ensemble de trames de l'entrée vidéo sur la base d'informations statistiques des données d'image originales et des données d'image filtrées correspondantes ; et
l'obtention d'informations d'estimation de bruit lissées en fonction des informations d'estimation de bruit de chaque trame de l'ensemble de trames, et l'utilisation des informations d'estimation de bruit lissées en tant qu'informations de niveau de bruit de la vidéo d'entrée.

3. Procédé selon la revendication 2, ladite détermination d'informations d'estimation de bruit de l'ensemble de trames de la vidéo d'entrée sur la base d'informations statistiques des données d'image originales et des données d'image filtrées correspondantes comprenant en outre :
la réalisation d'un calcul de variance de bloc sur les données d'image originales et les données d'image filtrées correspondantes respectivement, pour obtenir des informations statistiques originales correspondantes et des informations statistiques de traitement ; et
la comparaison des informations statistiques originales aux informations statistiques de traitement, pour déterminer les informations d'estimation de bruit de l'ensemble de trames.

4. Procédé selon l'une quelconque des revendications 1 à 3, ladite sélection d'un algorithme de débruitage de la vidéo à débruiter en fonction des informations de niveau de bruit comprenant en outre :
la détermination d'un paramètre de débruitage de la vidéo à débruiter en fonction des informations de niveau de bruit ; et
le détermination de l'algorithme de débruitage de la vidéo à débruiter en fonction du paramètre de débruitage.

5. Procédé selon la revendication 4, ladite détermination du paramètre de débruitage de la vidéo à débruiter en fonction des informations de niveau de bruit comprenant en outre :
la détermination du paramètre de débruitage de la vidéo à débruiter en fonction des informations de niveau de bruit et des informations de codeur.

6. Procédé selon l'une quelconque des revendications 1 à 5, après avoir déterminé si l'intensité de débruitage est supérieure à un seuil de filtrage ledit procédé comprenant en outre :
l'établissement de statistiques sur un certain nombre de points de la trame courante après l'algorithme de filtrage intra-trame compliqué ; et
l'ajustement du seuil de criblage sur la base des statistiques et d'un paramètre de complexité de système de sorte que si la complexité de calcul de la trame est supérieure au paramètre, alors le seuil de criblage est réduit.

7. Appareil de traitement de vidéo (1) comprenant :
un dispositif d'estimation de bruit (11) utilisé pour estimer le bruit d'une vidéo d'entrée afin d'obtenir des informations de niveau de bruit de la vidéo d'entrée ; et
un dispositif de traitement (12) utilisé pour la sélection, en fonction des informations de niveau de bruit, d'un schéma de débruitage pour traiter la vidéo d'entrée ;
ledit dispositif d'estimation de bruit (11) et ledit dispositif de traitement (12) étant en outre conçus pour exécuter le procédé selon l'une quelconque des revendications 1 à 6.

8. Support lisible par ordinateur qui stocke un ensemble d'instructions qui, lorsqu'elles sont exécutées par au moins un processeur d'un appareil de traitement de vidéo (1), amènent l'appareil de traitement de vidéo (1) à exécuter le procédé de traitement de vidéo selon l'une quelconque des revendications 1 à 6.
